# EUROPÄISCHE PATENTSCHRIFT

(11) **EP 3 492 329 B1**
(45) Veröffentlichungstag und Bekanntmachung des Hinweises auf die Patenterteilung: **20.08.2025**
(21) Anmeldenummer: 18207175.3
(22) Anmeldetag: 20.11.2018
(51) Int. Cl.: B60W 30/16

(54) **VERFAHREN ZUM BETREIBEN EINES KRAFTFAHRZEUGS SOWIE ENTSPRECHENDES KRAFTFAHRZEUG**
MOTOR VEHICLE AND METHOD FOR OPERATING A CORRESPONDING MOTOR VEHICLE
PROCÉDÉ DE FONCTIONNEMENT D'UN VÉHICULE AUTOMOBILE AINSI QUE VÉHICULE AUTOMOBILE CORRESPONDANT

(30) Priorität: 03.12.2017 DE 102017221740
(43) Veröffentlichungstag der Anmeldung: 05.06.2019
(73) Patentinhaber: AUDI AG, 85045 Ingolstadt (DE)
(72) Erfinder: Glück, Christian, 85072 Eichstätt (DE); Schmidhuber, Michael, 85088 Vohburg (DE); Falk, Sebastian, 85051 Ingolstadt (DE)

(56) Entgegenhaltungen:
- DE-A1- 102011 121 853
- DE-A1- 102014 207 068
- DE-A1- 4 437 678
- US-A1- 2015 006 056
- US-A1- 2015 314 771

## Beschreibung

Die Erfindung betrifft ein Verfahren zum Betreiben eines Kraftfahrzeugs, das eine Antriebseinrichtung zum Bereitstellen eines Antriebsdrehmoments sowie eine Erfassungseinrichtung zum Erfassen wenigstens eines vorausfahrenden weiteren Kraftfahrzeugs aufweist, wobei eine automatische Längsführung des Kraftfahrzeugs durchgeführt wird. Die Erfindung betrifft weiterhin ein Kraftfahrzeug.

Aus dem Stand der Technik ist beispielsweise die Druckschrift WO 2012/072464 A1 bekannt. Diese betrifft ein Verfahren zum Betreiben eines Fahrzeugs, bei welchem in Schub- und/oder Bremsphasen des Fahrzeugs Energie rekuperiert und in einen fahrzeuginternen Energiespeicher gespeichert wird, wobei die Umgebung des Fahrzeugs mittels einer Detektoreinrichtung erfasst wird und abhängig von einem Erfassen eines Objekts in der Fahrzeugumgebung zumindest ein Objektcharakteristikum ausgewertet wird und Abhängigkeit von der Auswertung des Objektcharakteristikums die Schub- und/oder Bremsphase automatisch an zumindest einen den Energiespeicher kennzeichnenden Parameter angepasst durchgeführt wird. DE 44 37 678 A1 offenbart ein weiteres Verfahren zur Abstandsregelung von Kraftfahrzeugen. US 2015/0314771 A1 offenbart ein Regelungssystem für ein hybridisch angetriebenes Fahrzeug.

Es ist Aufgabe der Erfindung, ein Verfahren zum Betreiben eines Kraftfahrzeugs vorzuschlagen, welches gegenüber bekannten Verfahren Vorteile aufweist, insbesondere einen besonders effizienten und/oder komfortablen Betrieb des Kraftfahrzeugs ermöglicht.

Dies wird erfindungsgemäß mit einem Verfahren zum Betreiben eines Kraftfahrzeugs mit den Merkmalen des Anspruchs 1 und einem Kraftfahrzeug mit den Merkmalen des Anspruchs 8 erreicht. Dabei ist vorgesehen, dass im Rahmen der Längsführung ein Abstand des Kraftfahrzeugs von dem weiteren Kraftfahrzeug auf einen Sollabstand eingeregelt wird, wobei der Sollabstand bei konstantem Abstand einem Vorgabeabstand entspricht und ausgehend von dem Vorgabeabstand bei einer aus einer positiven Beschleunigung des weiteren Kraftfahrzeugs resultierenden Abstandsänderung vergrößert und bei einer aus einer negativen Beschleunigung des weiteren Kraftfahrzeugs resultierenden Abstandsänderung verkleinert wird.

Das Kraftfahrzeug verfügt über die Antriebseinrichtung, welche dem Antreiben des Kraftfahrzeugs, insoweit also dem Bereitstellen des auf das Antreiben des Kraftfahrzeugs gerichteten Antriebsdrehmoments, dient. Weiterhin verfügt das Kraftfahrzeug über die Erfassungseinrichtung, beispielsweise eine Umfelderfassungseinrichtung, welche zumindest zum Erfassen des wenigstens einen vorausfahrenden weiteren Kraftfahrzeugs - sofern vorhanden - dient. Das bedeutet, dass mittels der Erfassungseinrichtung erkannt werden kann, ob das weitere Kraftfahrzeug vorliegt. Ist dies der Fall, so wird das weitere Kraftfahrzeug erfasst beziehungsweise überwacht.

Mithilfe der Erfassungseinrichtung wird die automatische Längsführung des Kraftfahrzeugs durchgeführt, wobei eine Geschwindigkeit des Kraftfahrzeugs derart einer Geschwindigkeit des vorausfahrenden weiteren Kraftfahrzeugs angeglichen wird, dass der zwischen dem Kraftfahrzeug und dem weiteren Kraftfahrzeug vorliegende Abstand zumindest zeitweise konstant bleibt. Im Rahmen der Längsführung wird insoweit die Antriebseinrichtung zum Bereitstellen eines bestimmten Antriebsdrehmoments eingestellt, sodass sich eine im Rahmen der Längsführung vorgegebene Geschwindigkeit und/oder Beschleunigung des Kraftfahrzeugs einstellt.

Es ist nun vorgesehen, dass der zwischen dem Kraftfahrzeug und dem weiteren Kraftfahrzeug vorliegende Abstand im Rahmen der Längsführung auf den Sollabstand eingeregelt wird. Der Sollabstand entspricht einem bestimmten Abstand zwischen den beiden Kraftfahrzeugen, also dem Kraftfahrzeug und dem weiteren Kraftfahrzeug, und soll zumindest zeitweise konstant gehalten werden. Dies ist insbesondere der Fall, falls das weitere Kraftfahrzeug sich mit gleichbleibender Geschwindigkeit bewegt. Bei konstanter Geschwindigkeit beider Kraftfahrzeuge liegt folglich ein konstanter Abstand vor. In diesem Fall wird der Sollabstand auf den Vorgabeabstand eingestellt und nachfolgend die Abstandsregelung durchgeführt. Schlussendlich liegt insoweit zwischen den Kraftfahrzeugen ein dem Vorgabeabstand entsprechender Abstand vor, nämlich für den Fall, dass sich beide mit konstanter Geschwindigkeit bewegen und die Geschwindigkeit des Kraftfahrzeugs der Geschwindigkeit des weiteren Kraftfahrzeugs entspricht.

Wird das weitere Kraftfahrzeug schneller oder langsamer, so verändert sich der Abstand zwischen den Kraftfahrzeugen, zumindest bis die Abstandsregelung den Abstand zwischen den Kraftfahrzeugen wieder auf den Sollabstand beziehungsweise den Vorgabeabstand eingeregelt hat. Erhöht sich die Geschwindigkeit des weiteren Kraftfahrzeugs, liegt also eine positive Beschleunigung vor, so wird der Abstand zwischen den Kraftfahrzeugen zunächst größer. Umgekehrt wird der Abstand bei einer Verringerung der Geschwindigkeit des weiteren Kraftfahrzeugs und insoweit einer negativen Beschleunigung kleiner.

Es ist Ziel des erfindungsgemäßen Verfahrens, den Fahrbetrieb des Kraftfahrzeugs zum einen möglichst energieeffizient und zum anderen möglichst komfortabel für einen Insassen des Kraftfahrzeugs zu gestalten. Aus diesem Grund ist es nicht vorgesehen, bei der positiven Beschleunigung oder der negativen Beschleunigung des weiteren Kraftfahrzeugs unmittelbar eine entsprechende Beschleunigung des Kraftfahrzeugs herbeizuführen, nämlich durch Anforderung eines korrespondierenden Antriebsdrehmoments von der Antriebseinrichtung.

Vielmehr wird im Falle der positiven Beschleunigung eine Vergrößerung des Abstands zwischen den Kraftfahrzeugen und bei der negativen Beschleunigung eine Verkleinerung des Abstands zwischen den Kraftfahrzeugen zugelassen. Hierzu wird der Sollabstand ausgehend von dem Vorgabeabstand vergrößert, wenn die positive Beschleunigung vorliegt, und verkleinert, falls die negative Beschleunigung vorliegt. Entsprechend ist die Beschleunigung des Kraftfahrzeugs zumindest vorübergehend kleiner als die Beschleunigung des weiteren Kraftfahrzeugs, sodass die Beschleuningung von dem Insassen des Kraftfahrzeugs als angenehm empfunden wird.

Erfindungsgemäß ist das Kraftfahrzeug ein hybridisch angetriebenes Kraftfahrzeug, welches ein erstes Antriebsaggregat und ein zweites Antriebsaggregat aufweist. Das Nenndrehmoment des zweiten Antriebsaggregats ist hierbei vorzugsweise kleiner als das Nenndrehmoment des ersten Antriebsaggregats. Erfindungsgemäß wird als erstes Antriebsaggregat eine Brennkraftmaschine und als zweites Antriebsaggregat eine elektrische Maschine herangezogen, wobei die elektrische Maschine auch als Traktionsmaschine bezeichnet werden kann.

Durch das Zulassen der Abstandsvergrößerung zwischen den Kraftfahrzeugen wird das Antriebsdrehmoment derart gewählt, dass es allein mittels des zweiten Antriebsaggregats bereitgestellt werden kann. Dies verhindert bei einer positiven Beschleunigung des Kraftfahrzeugs einen Zustart des ersten Antriebsaggregats, nämlich beispielsweise der Brennkraftmaschine. Im Falle der negativen Beschleunigung wird der Einsatz einer Betriebsbremse des Kraftfahrzeugs unterbunden, solange dies möglich ist. Entsprechend erfolgt ein energieeffizientes Verzögern des Kraftfahrzeugs mithilfe des zweiten Antriebsaggregats unter Rekuperierung von elektrischer Energie.

Es kann beispielsweise auch vorgesehen sein, dass ein Verzögern des Kraftfahrzeugs, also eine negative Beschleunigung, allein durch Rolldrehmomente und/oder Reibdrehmomente erzielt wird, sodass die Antriebseinrichtung nicht verwendet wird. Entsprechend wird also weder das erste Antriebsaggregat noch das zweite Antriebsaggregat zum Verzögern des Kraftfahrzeugs herangezogen, sofern das Rolldrehmoment und/oder das Reibdrehmoment, beispielsweise eines Antriebsstrangs des Kraftfahrzeugs, ausreichend ist, um das Kraftfahrzeug in ausreichendem Maß zu verzögern, nämlich insbesondere derart, dass ein Aufprall auf das weitere Kraftfahrzeug vermieden wird.

Es soll explizit darauf hingewiesen werden, dass unabhängig von der Wahl des Sollabstands, also unabhängig davon, ob der Sollabstand dem Vorgabeabstand entspricht oder kleiner beziehungsweise größer ist, die Abstandsregelung durchgeführt wird, nämlich der Abstand zwischen den Kraftfahrzeugen auf den Sollabstand eingeregelt wird. Die Abstandsregelung wird also auch bei der Beschleunigung des weiteren Kraftfahrzeugs nicht unterbrochen, vielmehr wird sie durchgehend durchgeführt.

In anderen Worten ist vorgesehen, dass im Rahmen der Längsführung ein Abstand des Kraftfahrzeugs von dem weiteren Kraftfahrzeug auf einen Sollabstand eingeregelt wird, wobei der Sollabstand bei konstanter Geschwindigkeit des weiteren Kraftfahrzeugs einem Vorgabeabstand entspricht und ausgehend von dem Vorgabeabstand bei einer aus einer positiven Beschleunigung des weiteren Kraftfahrzeugs resultierenden größer werdenden Geschwindigkeit vergrößert und bei einer aus einer negativen Beschleunigung des weiteren Kraftfahrzeugs resultierenden kleineren Geschwindigkeit verkleinert wird.

Im Rahmen einer weiteren Ausführungsform der Erfindung ist vorgesehen, dass der Sollabstand nach unten mit einem Minimalabstand und nach oben mit einem Maximalabstand begrenzt wird, die zusammen einen Vorgabeabstandsbereich erfassen. Der Vorgabeabstandsbereich wird insoweit von dem Minimalabstand und dem Maximalabstand definiert, wobei ihn der Minimalabstand nach unten und der Maximalabstand nach oben begrenzt. Der Minimalabstand entspricht dem minimal zwischen den Kraftfahrzeugen zulässigen Abstand, wohingegen der Maximalabstand den maximal zulässigen Abstand zwischen den Kraftfahrzeugen abbildet.

Durch entsprechende Wahl des Vorgabeabstandsbereichs kann entsprechend ein Unfall zwischen den Kraftfahrzeugen zuverlässig unterbunden, umgekehrt jedoch auch ein zu großer Abstand zwischen den Kraftfahrzeugen verhindert werden. Besonders bevorzugt ist es bei der Festlegung des Vorgabeabstandsbereichs vorgesehen, den Minimalabstand in Abhängigkeit von zumindest der Geschwindigkeit des Kraftfahrzeugs festzulegen. Der Minimalabstand ist also nicht konstant, sondern wird aus der Geschwindigkeit des Kraftfahrzeugs errechnet, nämlich derart, dass zwischen den Kraftfahrzeugen stets ein ausreichender Abstand vorliegt, welcher ein zuverlässiges Anhalten des Kraftfahrzeugs aus der momentan vorliegenden Geschwindigkeit ermöglicht.

Zusätzlich kann zudem ein Reibwert zwischen einem Reifen des Kraftfahrzeugs und einem Untergrund in die Berechnung des Minimalabstands einfließen. Zusätzlich oder alternativ kann auch wenigstens einer der nachfolgenden Werte Verwendung finden: Die Geschwindigkeit des weiteren Kraftfahrzeugs, die Beschleunigung des weiteren Kraftfahrzeugs und wenigstens eine Umgebungsbedingung, beispielsweise ein Niederschlagzustand und/oder eine Außentemperatur.

Bevorzugt hat ein Benutzer des Kraftfahrzeugs keinen Einfluss auf den Minimalabstand. Dieser ist also entweder konstant festgelegt oder wird variabel gemäß den vorstehenden Ausführungen festgelegt. Alternativ kann es vorgesehen sein, dass der Benutzer des Kraftfahrzeugs den Minimalabstand ausgehend von dem in Abhängigkeit von zumindest der Geschwindigkeit des Kraftfahrzeugs festgelegten Wert ausschließlich vergrößern, nicht jedoch verkleinern kann.

Im Gegensatz hierzu kann es jedoch vorgesehen sein, dass der Benutzer des Kraftfahrzeugs den Maximalabstand beliebig einstellen kann, wobei der Maximalabstand nach unten auf den Minimalabstand begrenzt ist, also nicht kleiner sein kann als dieser. Vorzugsweise ist der Maximalabstand stets größer als der Minimalabstand.

Im Rahmen einer weiteren bevorzugten Ausführungsform der Erfindung kann vorgesehen sein, dass eine Vorgabebeschleunigung in Abhängigkeit von der Beschleunigung des weiteren Kraftfahrzeugs ermittelt und an der Antriebseinrichtung eingestellt wird, wobei die Vorgabebeschleunigung auf eine Geschwindigkeitsänderung des Kraftfahrzeugs gerichtet ist und das gleiche Vorzeichen aufweist wie die Beschleunigung des weiteren Kraftfahrzeugs. Die Vorgabebeschleunigung wird mit Hilfe der Antriebseinrichtung umgesetzt, nämlich durch Einstellen eines entsprechenden Solldrehmoments an der Antriebseinrichtung. Die Antriebseinrichtung wird nachfolgend dazu angesteuert, ein dem Solldrehmoment entsprechendes Istdrehmoment in Form des Antriebsdrehmoments zum Beschleunigen des Kraftfahrzeugs zu erzeugen.

Zusätzlich oder alternativ kann auch die Betriebsbremse des Kraftfahrzeugs entsprechend angesteuert werden, nämlich falls die negative Beschleunigung des weiteren Kraftfahrzeugs vorliegt. In jedem Fall ist jedoch die Vorgabebeschleunigung auf die Geschwindigkeitsänderung des Kraftfahrzeugs gerichtet, ist also von Null verschieden. Sie weist jedoch das gleiche Vorzeichen auf wie die Beschleunigung des weiteren Kraftfahrzeugs. Ist also die Beschleunigung des weiteren Kraftfahrzeugs positiv, so soll auch die Vorgabebeschleunigung positiv sein.

Im Falle der negativen Beschleunigung des weiteren Kraftfahrzeugs ist auch die Vorgabebeschleunigung negativ. Zumindest zeitweise ist jedoch die Vorgabebeschleunigung kleiner als die Beschleunigung des weiteren Kraftfahrzeugs, um bei der positiven Beschleunigung des weiteren Kraftfahrzeugs den zwischen den Kraftfahrzeugen vorliegenden Abstand zu vergrößern und bei der negativen Beschleunigung des weiteren Kraftfahrzeugs zu verkleinern. Mit einer derartigen Wahl der Vorgabebeschleunigung können die bereits bezeichneten Vorteile erzielt werden.

Erfindungsgemäß ist ferner vorgesehen, dass anhand wenigstens einer Umgebungsbedingung eine Endgeschwindigkeit des weiteren Kraftfahrzeugs an einem Beschleunigungsende prädiziert wird. Sowohl im Falle der positiven Beschleunigung als auch der negativen Beschleunigung soll insoweit abgeschätzt werden, wie hoch die Endgeschwindigkeit des weiteren Kraftfahrzeugs am Ende der Beschleunigung sein wird. Die Geschwindigkeit des weiteren Kraftfahrzeugs verändert sich während der Beschleunigung und bleibt ab dem Beschleunigungsende konstant, zumindest für einen kurzen Zeitraum, vorzugsweise jedoch dauerhaft.

Die Endgeschwindigkeit kann zumindest im Falle der positiven Beschleunigung anhand der Umgebungsbedingung abgeschätzt werden. Unter der Umgebungsbedingung ist beispielsweise ein Zustand des Untergrunds, eine vorgegebene Höchstgeschwindigkeit, eine Verkehrsdichte oder dergleichen zu verstehen. So wird die Endgeschwindigkeit im Falle einer hohen Verkehrsdichte niedriger sein als im Falle einer niedrigen Verkehrsdichte.

Wenigstens eine der genannten Umgebungsbedingungen kann auch im Falle der negativen Beschleunigung zum Prädizieren der Endgeschwindigkeit herangezogen werden. Es kann jedoch auch vorgesehen sein, dass die Endgeschwindigkeit in einer einfachen Ausführungsform auf Null gesetzt wird, sodass stets angenommen wird, dass die negative Beschleunigung auf ein Anhalten des weiteren Kraftfahrzeugs gerichtet ist beziehungsweise dieses bewirkt. Durch das Abschätzen der Endgeschwindigkeit des weiteren Kraftfahrzeugs kann eine besonders sichere und energieeffiziente Längsführung des Kraftfahrzeugs durchgeführt werden.

Eine Weiterbildung der Erfindung sieht vor, dass anhand zumindest der Beschleunigung des Kraftfahrzeugs und der Beschleunigung des weiteren Kraftfahrzeugs der voraussichtliche Abstand des Kraftfahrzeugs zu dem weiteren Kraftfahrzeug an dem Beschleunigungsende ermittelt wird. Dieses Ermitteln erfolgt vorzugsweise durchgehend im Rahmen der Längsführung, falls die Beschleunigung des weiteren Kraftfahrzeugs vorliegt, sich also seine Geschwindigkeit verändert. Aus den Beschleunigungen der beiden Kraftfahrzeuge sowie der Zeitspanne zwischen dem Zeitpunkt der Berechnung des voraussichtlichen Abstands und dem Beschleunigungsende kann der voraussichtliche Abstand zwischen den Kraftfahrzeugen an dem Beschleunigungsende berechnet werden.

Beispielsweise wird hierbei angenommen, dass die Beschleunigung des Kraftfahrzeugs und die Beschleunigung des weiteren Kraftfahrzeugs bis zu dem Beschleunigungsende konstant bleiben. Das Beschleunigungsende beziehungsweise der Zeitraum bis zum Beschleunigungsende wird vorzugsweise durch eine Extrapolation der Geschwindigkeit des Kraftfahrzeugs bis hin zu der Endgeschwindigkeit unter Verwendung der momentanen Beschleunigung des weiteren Kraftfahrzeugs berechnet.

Zusätzlich kann auch der Beschleunigungsgradient des Kraftfahrzeugs und/oder der Beschleunigungsgradient des weiteren Kraftfahrzeugs zur Berechnung herangezogen werden. Unter dem Beschleunigungsgradient ist die Veränderung der jeweiligen Beschleunigung über der Zeit zu verstehen. Die Ermittlung des voraussichtlichen Abstands zwischen den Kraftfahrzeugen an dem Beschleunigungsende ermöglicht eine zuverlässige Längsführung des Kraftfahrzeugs.

Eine besonders bevorzugte weitere Ausgestaltung der Erfindung sieht vor, dass das an der Antriebseinrichtung eingestellte Solldrehmoment derart gewählt wird, dass der voraussichtliche Abstand in dem Vorgabeabstandsbereich liegt. Nach dem Ermitteln des voraussichtlichen Abstands an dem Beschleunigungsende wird also der Abstand mit dem Vorgabeabstandsbereich beziehungsweise dem Minimalabstand und dem Maximalabstand verglichen. Bevorzugt unter der Annahme, dass die Beschleunigung des weiteren Kraftfahrzeugs bis zu dem Beschleunigungsende konstant bleibt, wird nun das Solldrehmoment derart gewählt, dass der voraussichtlich an dem Beschleunigungsende vorliegende Abstand in dem Vorgabeabstandsbereich liegt, sodass einerseits eine Kollision der Kraftfahrzeuge und andererseits eine unerwünscht deutliche Vergrößerung des Abstands vermieden wird.

Beispielsweise erfolgt das Wählen des Solldrehmoments im Rahmen einer Regelung des Solldrehmoments in Abhängigkeit von dem voraussichtlichen Abstand. Das Solldrehmoment dient insoweit als Stellgröße, wohingegen eine Regelgröße aus dem voraussichtlichen Abstand ermittelt wird. Beispielsweise ergibt sich die Regelgröße aus der Differenz zwischen dem voraussichtlichen Abstand und dem Minimalabstand oder dem Maximalabstand, je nachdem, welcher Wert näher liegt.

Beispielsweise wird das Solldrehmoment konstant gehalten, solange der voraussichtliche Abstand in dem Vorgabeabstandsbereich liegt. Verlässt jedoch der voraussichtliche Abstand den Vorgabeabstandsbereich nach unten oder nach oben, so wird das Solldrehmoment derart geändert und an der Antriebseinrichtung eingestellt, dass sich der voraussichtliche Abstand in Richtung des Vorgabeabstandsbereichs, insbesondere in diesen hinein, verändert. Mit einer derartigen Vorgehensweise ist ein sicherer Fahrbetrieb des Kraftfahrzeugs gewährleistet.

Eine besonders bevorzugte weitere Ausgestaltung der Erfindung sieht vor, dass das Solldrehmoment derart gewählt wird, dass der voraussichtliche Abstand an dem Beschleunigungsende - bei der negativen Beschleunigung - dem Minimalabstand oder - bei der positiven Beschleunigung - dem Maximalabstand entspricht. Es ist also nicht nur vorgesehen, den voraussichtlichen Abstand in dem Vorgabeabstandsbereich zu halten. Vielmehr soll er explizit auf eine der Begrenzungen des Vorgabeabstandsbereichs, also entweder den Minimalabstand oder den Maximalabstand, eingestellt werden.

Wird das weitere Kraftfahrzeug langsamer, so soll der voraussichtliche Abstand an dem Beschleunigungsende dem Minimalabstand entsprechen. Umgekehrt wird bei einem Schnellerwerden des weiteren Kraftfahrzeugs der Maximalabstand als Bezugsgröße für den voraussichtlichen Abstand herangezogen. Dies ermöglicht insbesondere im Falle der negativen Beschleunigung einen energieeffizienten Fahrbetrieb des Kraftfahrzeugs.

Eine weitere Ausführungsform der Erfindung sieht vor, dass ab dem Beschleunigungsende die Geschwindigkeit des Kraftfahrzeugs durch Beibehalten des Solldrehmoments derart eingestellt wird, dass sich der Abstand zwischen dem Kraftfahrzeug und dem weiteren Kraftfahrzeug in Richtung des Vorgabeabstands verändert. An dem Beschleunigungsende liegt zwar der Abstand zwischen den Kraftfahrzeugen in dem Vorgabeabstandsbereich, entspricht jedoch üblicherweise nicht mehr dem Vorgabeabstand. Der Vorgabeabstand liegt bevorzugt in dem Vorgabeabstandsbereich, ist also einerseits größer als der Minimalabstand und andererseits kleiner als der Maximalabstand. Besonders bevorzugt liegt der Vorgabeabstand mittig zwischen dem Minimalabstand und dem Maximalabstand, weist also von beiden denselben Abstand auf.

Der Vorgabeabstand ist der üblicherweise gewünschte Abstand zwischen den Kraftfahrzeugen, welche im Rahmen der Längsführung eingestellt wird. Daher soll, nachdem durch die Verringerung oder Vergrößerung des Abstands die Vorteile des im Rahmen dieser Beschreibung beschriebenen Verfahrens erzielt wurden, der Abstand zwischen den Kraftfahrzeugen wieder auf den Vorgabeabstand beziehungsweise den dem Vorgabeabstand entsprechenden Sollabstand eingeregelt werden. Für den Benutzer des Kraftfahrzeugs ergibt sich daher keine Umgewöhnung. Dennoch können die beschriebenen Vorteile durch die vorhergehende Verringerung beziehungsweise Vergrößerung des Abstands erzielt werden.

Erfindungsgemäß ist vorgesehen, dass bei ab dem Beschleunigungsende konstant bleibende Geschwindigkeit des weiteren Kraftfahrzeugs der Abstand des Kraftfahrzeugs von dem weiteren Kraftfahrzeug auf den Sollabstand eingeregelt wird. Das Einregeln des Abstands zwischen den Kraftfahrzeugen auf den Sollabstand soll also nicht nur vor dem Auftreten der positiven Beschleunigung oder der negativen Beschleunigung durchgeführt werden, sondern zudem auch nach dem Beschleunigungsende, genauer gesagt genau ab dem Beschleunigungsende. Wird die konstant bleibende Geschwindigkeit des weiteren Kraftfahrzeugs festgestellt, so wird der Sollabstand auf den Vorgabeabstand eingestellt und nachfolgend der Abstand auf diesen eingeregelt.

Die Erfindung betrifft weiterhin ein Kraftfahrzeug, insbesondere zur Durchführung des Verfahrens gemäß den Ausführungen im Rahmen dieser Beschreibung, das eine Antriebseinrichtung zum Bereitstellen eines Antriebsdrehmoments sowie eine Erfassungseinrichtung zum Erfassen wenigstens eines vorausfahrenden weiteren Kraftfahrzeugs aufweist, und wobei eine Einrichtung zur automatischen Längsführung des Kraftfahrzeugs vorliegt. Dabei ist vorgesehen, dass das Kraftfahrzeug dazu ausgebildet ist, im Rahmen der Längsführung einen Abstand des Kraftfahrzeugs von dem weiteren Kraftfahrzeug auf einen Sollabstand einzuregeln, wobei der Sollabstand bei konstantem Abstand einem Vorgabeabstand entspricht und ausgehend von dem Vorgabeabstand bei einem aus einer positiven Beschleunigung des weiteren Kraftfahrzeugs resultierenden Abstandsänderung vergrößert und bei einer aus einer negativen Beschleunigung des weiteren Kraftfahrzeugs resultierenden Abstandsänderung verkleinert wird.

Auf die Vorteile einer derartigen Vorgehensweise beziehungsweise einer derartigen Ausgestaltung des Kraftfahrzeugs wurde bereits hingewiesen. Sowohl das Kraftfahrzeug als auch das Verfahren zu seinem Betreiben können gemäß den Ausführungen im Rahmen dieser Beschreibung weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: ein Diagramm, in welchem die Geschwindigkeit eines vorausfahrenden Kraftfahrzeugs über der Zeit für eine positive Beschleunigung aufgetragen ist,
- Figur 2: ein Diagramm, in welchem eine Geschwindigkeit eines Kraftfahrzeugs über der Zeit für die positive Beschleunigung des vorausfahrenden Kraftfahrzeugs über der Zeit aufgetragen ist,
- Figur 3: ein Diagramm, in welchem die Geschwindigkeit des weiteren Kraftfahrzeugs für eine negative Beschleunigung über der Zeit aufgetragen ist, sowie
- Figur 4: ein Diagramm, in welchem die Geschwindigkeit des Kraftfahrzeugs für die negative Beschleunigung über der Zeit aufgetragen ist.

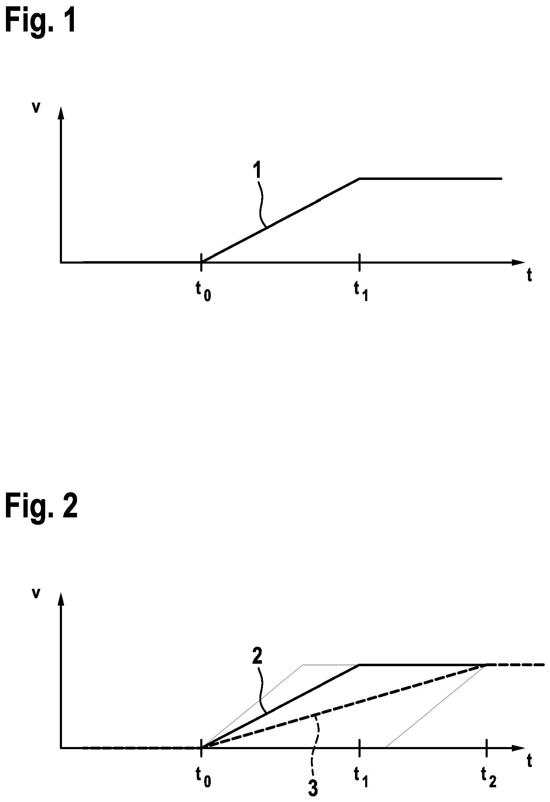

Die Figur 1 zeigt ein Diagramm, in welchem ein Verlauf 1 einer Geschwindigkeit v eines vorausfahrenden Kraftfahrzeugs über der Zeit t aufgetragen ist. Es wird deutlich, dass die Geschwindigkeit ab dem Zeitpunkt t₀ mit konstanter positiver Beschleunigung zunimmt. Ab dem Zeitpunkt t₁ ist die Beschleunigung gleich Null, sodass nachfolgend die Geschwindigkeit des vorausfahrenden Kraftfahrzeugs konstant bleibt.

Die Figur 2 zeigt ein Diagramm, in welchem die Geschwindigkeit v eines Kraftfahrzeugs über der Zeit t aufgetragen ist. Das Kraftfahrzeug verfügt über eine Antriebseinrichtung zum Bereitstellen eines Antriebsdrehmoments sowie über eine Erfassungseinrichtung zum Erfassen des wenigstens einen vorausfahrenden weiteren Kraftfahrzeugs. Für das Kraftfahrzeug wird eine automatische Längsführung durchgeführt, bei welcher ein Abstand des Kraftfahrzeugs von dem weiteren Kraftfahrzeug auf einen Sollabstand eingeregelt wird.

Der Sollabstand entspricht bei konstantem Abstand zwischen den Kraftfahrzeugen einem Vorgabeabstand. Verändert sich der Abstand zwischen den Kraftfahrzeugen aufgrund einer Beschleunigung des weiteren Kraftfahrzeugs, so wird der Sollabstand ausgehend von dem Vorgabeabstand verändert. Im Falle einer positiven Beschleunigung des weiteren Kraftfahrzeugs soll der Sollabstand vergrößert und im Falle einer negativen Beschleunigung des weiteren Kraftfahrzeugs verkleinert werden.

In dem Diagramm ist ein Verlauf der Geschwindigkeit des Kraftfahrzeugs für eine übliche Abstandsregelung dargestellt. Es wird deutlich, dass die Beschleunigung des Kraftfahrzeugs im Wesentlichen der Beschleunigung des weiteren Kraftfahrzeugs entspricht. Aus diesem Grund nimmt die Geschwindigkeit ab dem Zeitpunkt t₀ zu und erreicht - für den Verlauf 2 - die endgültige Geschwindigkeit in dem Zeitpunkt t₁.

Gemäß der vorstehend skizzierten Vorgehensweise ist es nun jedoch vorgesehen, den Sollabstand im Falle der positiven Beschleunigung ausgehend von dem Vorgabeabstand zu vergrößern. Entsprechend wird also eine Vergrößerung des Abstands zwischen den Kraftfahrzeugen zugelassen, sodass insgesamt eine geringere Beschleunigung aufgebracht werden muss. Dies ist durch den Verlauf 3 der Geschwindigkeit des Kraftfahrzeugs über der Zeit t angedeutet. Hier wird die Endgeschwindigkeit des Kraftfahrzeugs erst in dem Zeitpunkt t₂ erreicht.

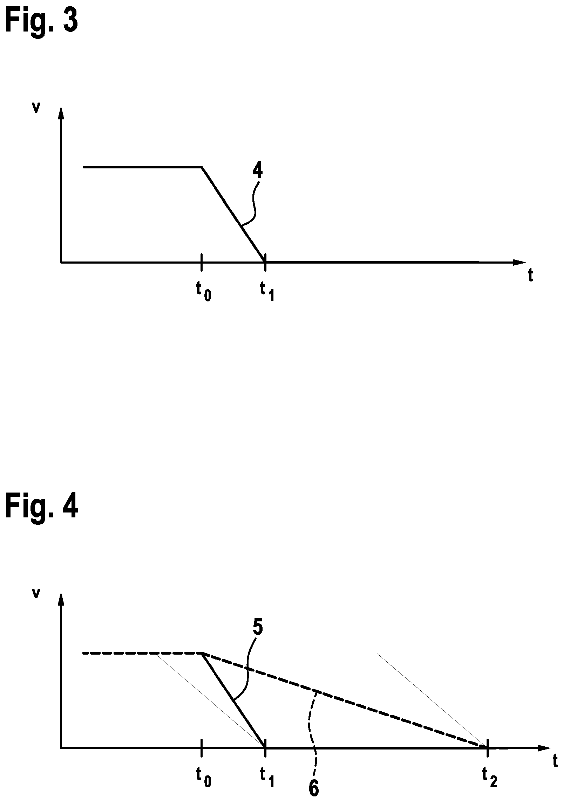

Die Figur 3 zeigt einen Verlauf 4 der Geschwindigkeit V des vorausfahrenden weiteren Kraftfahrzeugs über der Zeit t, wobei eine negative Beschleunigung vorliegt. Entsprechend weist das weitere Kraftfahrzeug eine bestimmte Geschwindigkeit auf, welche sich ausgehend von dem Zeitpunkt t₀ verringert, nämlich bis auf Null in dem Zeitpunkt t₁.

Die Figur 4 zeigt ein Diagramm, in welchem ein Verlauf 5 und ein Verlauf 6, jeweils für die Geschwindigkeit V des Kraftfahrzeugs über der Zeit t, dargestellt sind. Wiederum zeigt der Verlauf 5 die Geschwindigkeit des Kraftfahrzeugs für eine herkömmliche Abstandsregelung, wohingegen der Verlauf 6 die skizzierte Vorgehensweise andeutet.

Für beide Verläufe 5 und 6 verringert sich die Geschwindigkeit ab dem Zeitpunkt t₀ in Richtung eines Stillstands des Kraftfahrzeugs. Für den Verlauf 5 ist dieser in dem Zeitpunkt t₁ erreicht. Weil für die anhand des Verlaufs 6 verdeutlichten Vorgehensweise eine Verringerung des Sollabstands ausgehend von dem Vorgabeabstand zugelassen wird, kann eine geringere negative Beschleunigung gewählt werden als für den Verlauf 5. Entsprechend erreicht auch hier das Kraftfahrzeug den Stillstand erst später als für den Verlauf 5, nämlich in dem Zeitpunkt t₂.

Das anhand der Diagramme skizzierte Verfahren ermöglicht zum einen einen hohen Komfort des Kraftfahrzeugs, weil starke Beschleunigungen vermieden werden. Zum anderen ist die Veränderung der Geschwindigkeit mit niedrigeren Beschleunigungen energieeffizienter. Dies gilt insbesondere, falls das Kraftfahrzeug ein hybridisch angetriebenes Kraftfahrzeug ist und das zum Beschleunigen herangezogene Drehmoment allein mittels einer elektrischen Maschine bereitgestellt wird, wohingegen eine Brennkraftmaschine des Kraftfahrzeugs deaktiviert bleibt.

## Patentansprüche

1. Verfahren zum Betreiben eines Kraftfahrzeugs, das eine Antriebseinrichtung zum Bereitstellen eines Antriebsdrehmoments sowie eine Erfassungseinrichtung zum Erfassen wenigstens eines vorausfahrenden weiteren Kraftfahrzeugs aufweist, wobei eine automatische Längsführung des Kraftfahrzeugs durchgeführt wird, indem eine Geschwindigkeit des Kraftfahrzeugs derart einer Geschwindigkeit des vorausfahrenden weiteren Kraftfahrzeugs angeglichen wird, dass ein zwischen dem Kraftfahrzeug und dem weiteren Kraftfahrzeug vorliegender Abstand zumindest zeitweise konstant bleibt, wobei der Abstand des Kraftfahrzeugs von dem weiteren Kraftfahrzeug auf einen Sollabstand eingeregelt wird, wobei der Sollabstand bei konstantem Abstand einem Vorgabeabstand entspricht und ausgehend von dem Vorgabeabstand bei einer aus einer positiven Beschleunigung des weiteren Kraftfahrzeugs resultierenden Abstandsänderung vergrößert und bei einer aus einer negativen Beschleunigung des weiteren Kraftfahrzeugs resultierenden Abstandsänderung verkleinert wird, **dadurch gekennzeichnet, dass** das Kraftfahrzeug hybridisch angetrieben ist und ein als eine Brennkraftmaschine ausgebildetes erstes Antriebsaggregat und ein als eine elektrische Maschine ausgebildetes zweites Antriebsaggregat aufweist, wobei bei einer positiven Beschleunigung des Kraftfahrzeugs ein Zustart der Brennkraftmaschine unterbunden und das Antriebsdrehmoment derart gewählt wird, dass es allein mittels der elektrischen Maschine bereitgestellt werden kann, und bei einer negativen Beschleunigung des Kraftfahrzeugs ein Verzögern des Kraftfahrzeugs mithilfe der elektrischen Maschine unter Rekuperierung von elektrischer Energie erfolgt, wobei anhand wenigstens einer Umgebungsbedingung eine Endgeschwindigkeit des weiteren Kraftfahrzeugs an einem Beschleunigungsende prädiziert wird, wobei bei ab dem Beschleunigungsende konstant bleibender Geschwindigkeit des weiteren Kraftfahrzeugs der Sollabstand auf den Vorgabeabstand eingestellt und nachfolgend der Abstand des Kraftfahrzeugs von dem weiteren Kraftfahrzeug auf diesen eingeregelt wird.

2. Verfahren nach Anspruch 1, **dadurch gekennzeichnet, dass** der Sollabstand nach unten mit einem Minimalabstand und nach oben mit einem Maximalabstand begrenzt wird, die zusammen einen Vorgabeabstandsbereich einfassen.

3. Verfahren nach einem der vorhergehenden Ansprüche, **dadurch gekennzeichnet, dass** eine Vorgabebeschleunigung in Abhängigkeit von der Beschleunigung des weiteren Kraftfahrzeugs ermittelt und an der Antriebseinrichtung eingestellt wird, wobei die Vorgabebeschleunigung auf eine Geschwindigkeitsänderung des Kraftfahrzeugs gerichtet ist und das gleiche Vorzeichen aufweist wie die Beschleunigung des weiteren Kraftfahrzeugs.

4. Verfahren nach einem der vorhergehenden Ansprüche, **dadurch gekennzeichnet, dass** anhand zumindest der Beschleunigung des Kraftfahrzeugs und der Beschleunigung des weiteren Kraftfahrzeugs der voraussichtliche Abstand des Kraftfahrzeugs zu dem weiteren Kraftfahrzeug an dem Beschleunigungsende ermittelt wird.

5. Verfahren nach den Ansprüchen 2 und 4, **dadurch gekennzeichnet, dass** das an der Antriebseinrichtung eingestellte Solldrehmoment derart gewählt wird, dass der voraussichtliche Abstand in dem Vorgabeabstandsbereich liegt.

6. Verfahren nach Anspruch 5, **dadurch gekennzeichnet, dass** das Solldrehmoment derart gewählt wird, dass der voraussichtliche Abstand an dem Beschleunigungsende - bei der negativen Beschleunigung - dem Minimalabstand oder - bei der positiven Beschleunigung - dem Maximalabstand entspricht.

7. Verfahren nach Anspruch 5, **dadurch gekennzeichnet, dass** ab dem Beschleunigungsende die Geschwindigkeit des Kraftfahrzeugs durch Beibehalten des Solldrehmoments derart eingestellt wird, dass sich der Abstand zwischen dem Kraftfahrzeug und dem weiteren Kraftfahrzeug in Richtung des Vorgabeabstands verändert.

8. Kraftfahrzeug, insbesondere zur Durchführung des Verfahrens nach einem oder mehreren der vorhergehenden Ansprüche, dass eine Antriebseinrichtung zum Bereitstellen eines Antriebsdrehmoments sowie eine Erfassungseinrichtung zum Erfassen wenigstens eines vorausfahrenden weiteren Kraftfahrzeugs aufweist, und wobei eine Einrichtung zur automatischen Längsführung des Kraftfahrzeugs vorliegt, die dazu ausgebildet ist, im Rahmen der Längsführung eine Geschwindigkeit des Kraftfahrzeugs derart einer Geschwindigkeit des vorausfahrenden weiteren Kraftfahrzeugs anzugleichen, dass ein zwischen dem Kraftfahrzeug und dem weiteren Kraftfahrzeug vorliegender Abstand zumindest zeitweise konstant bleibt, wobei der Abstand des Kraftfahrzeugs von dem weiteren Kraftfahrzeug auf einen Sollabstand eingeregelt wird, wobei der Sollabstand bei konstantem Abstand einem Vorgabeabstand entspricht und ausgehend von dem Vorgabeabstand bei einer aus einer positiven Beschleunigung des weiteren Kraftfahrzeugs resultierenden Abstandsänderung vergrößert und bei einer aus einer negativen Beschleunigung des weiteren Kraftfahrzeugs resultierenden Abstandsänderung verkleinert wird, **dadurch gekennzeichnet, dass** das Kraftfahrzeug hybridisch angetrieben ist und ein als eine Brennkraftmaschine ausgebildetes erstes Antriebsaggregat und ein als eine elektrische Maschine ausgebildetes zweites Antriebsaggregat aufweist, wobei das Kraftfahrzeug weiterhin dazu ausgebildet ist, bei einer positiven Beschleunigung des Kraftfahrzeugs ein Zustart der Brennkraftmaschine zu unterbinden und das Antriebsdrehmoment derart zu wählen, dass es allein mittels der elektrischen Maschine bereitgestellt werden kann, und bei einer negativen Beschleunigung des Kraftfahrzeugs ein Verzögern des Kraftfahrzeugs mithilfe der elektrischen Maschine unter Rekuperierung von elektrischer Energie erfolgt, wobei anhand wenigstens einer Umgebungsbedingung eine Endgeschwindigkeit des weiteren Kraftfahrzeugs an einem Beschleunigungsende prädiziert wird, wobei bei ab dem Beschleunigungsende konstant bleibender Geschwindigkeit des weiteren Kraftfahrzeugs der Sollabstand auf den Vorgabeabstand eingestellt und nachfolgend der Abstand des Kraftfahrzeugs von dem weiteren Kraftfahrzeug auf diesen eingeregelt wird.

## Claims

1. Method for operating a motor vehicle, which has a drive apparatus for providing a drive torque, as well as a detection apparatus for detecting at least one preceding further motor vehicle, wherein an automatic longitudinal guidance of the motor vehicle is performed by aligning a speed of the motor vehicle to a speed of the preceding further motor vehicle such that a distance between the motor vehicle and the further motor vehicle remains at least temporarily constant, wherein the distance of the motor vehicle from the further motor vehicle is adjusted to a setpoint distance, wherein, at a constant distance, the setpoint distance corresponds to a predefined distance and, based on the predefined distance, is increased in the event of a change in the distance resulting from a positive acceleration of the further motor vehicle and is decreased in the event of a change in the distance resulting from a negative acceleration of the further motor vehicle, **characterized in that** the motor vehicle is hybrid powered and has a first drive unit designed as an internal combustion engine and a second drive unit designed as an electric motor, wherein, in the event of a positive acceleration of the motor vehicle, the internal combustion engine is prevented from starting and the drive torque is selected such that it can only be provided by means of the electric motor, and, in the event of a negative acceleration of the motor vehicle, the motor vehicle is slowed down with the aid of the electric motor by recuperating electrical energy, wherein, on the basis of at least one environmental condition, an end speed of the further motor vehicle is predicted at an end of acceleration, wherein, when the speed of the further motor vehicle remains constant at the end of acceleration, the setpoint distance is set to the predefined distance and the distance of the motor vehicle from the further motor vehicle is subsequently adjusted thereto.

2. Method according to claim 1, **characterized in that** the setpoint distance is limited downwards with a minimum distance and upwards with a maximum distance, which together encompass a predefined distance range.

3. Method according to any one of the preceding claims, **characterized in that** a predefined acceleration is determined as a function of the acceleration of the further motor vehicle and is set at the drive apparatus, wherein the predefined acceleration is aligned to a change in the speed of the motor vehicle and has the same sign as the acceleration of the further motor vehicle.

4. Method according to any one of the preceding claims, **characterized in that** the anticipated distance of the motor vehicle from the further motor vehicle at the end of acceleration is determined on the basis of at least the acceleration of the motor vehicle and the acceleration of the further motor vehicle.

5. Method according to claims 2 and 4, **characterized in that** the setpoint torque set at the drive apparatus is selected such that the anticipated distance lies in the predefined distance range.

6. Method according to claim 5, **characterized in that** the setpoint torque is selected such that the anticipated distance at the end of acceleration - in the event of negative acceleration - corresponds to the minimum distance or - in the event of positive acceleration - corresponds to the maximum distance.

7. Method according to claim 5, **characterized in that** the speed of the motor vehicle is set from the end of acceleration by maintaining the setpoint torque such that the distance between the motor vehicle and the further motor vehicle changes in the direction of the predefined distance.

8. Motor vehicle, in particular for performing the method according to one or more of the preceding claims, such that it has a drive apparatus for providing a drive torque, as well as a detection apparatus for detecting at least one preceding further motor vehicle, and wherein there is an apparatus for automatic longitudinal guidance of the motor vehicle, which is designed, within the framework of longitudinal guidance, to align a speed of the motor vehicle to a speed of the preceding further motor vehicle, such that a distance between the motor vehicle and the further motor vehicle remains at least temporarily constant, wherein the distance of the motor vehicle from the further motor vehicle is adjusted to a setpoint distance, wherein, at a constant distance, the setpoint distance corresponds to a predefined distance and, based on the predefined distance, is increased in the event of a change in the distance resulting from a positive acceleration of the further motor vehicle and is decreased in the event of a change in the distance resulting from a negative acceleration of the further motor vehicle, **characterized in that** the motor vehicle is hybrid powered and has a first drive unit designed as an internal combustion engine and a second drive unit designed as an electric motor, wherein the motor vehicle is also designed, in the event of a positive acceleration of the motor vehicle, the internal combustion engine is prevented from starting and the drive torque is selected such that it can only be provided by means of the electric motor, and, in the event of a negative acceleration of the motor vehicle, the motor vehicle is slowed down with the aid of the electric motor by recuperating electrical energy, wherein, on the basis of at least one environmental condition, an end speed of the further motor vehicle is predicted at an end of acceleration, wherein, when the speed of the further motor vehicle remains constant at the end of acceleration, the setpoint distance is set to the predefined distance and the distance of the motor vehicle from the further motor vehicle is subsequently adjusted to this.

## Revendications

1. Procédé de fonctionnement d'un véhicule automobile qui présente un appareil d'entraînement pour fournir un couple d'entraînement ainsi qu'un appareil de détection pour détecter au moins un véhicule automobile supplémentaire qui le précède, dans lequel un guidage longitudinal automatique du véhicule automobile est effectué en alignant une vitesse du véhicule automobile sur une vitesse du véhicule automobile supplémentaire qui le précède, de sorte qu'une distance existant entre le véhicule automobile et le véhicule automobile supplémentaire reste constante au moins temporairement, dans lequel la distance du véhicule automobile par rapport au véhicule automobile supplémentaire est définie sur une distance de consigne, dans lequel la distance de consigne correspond, pour une distance constante, à une distance prédéfinie et est augmentée, à partir de la distance prédéfinie, lors d'une variation de distance résultant d'une accélération positive du véhicule automobile supplémentaire et est diminuée lors d'une variation de distance résultant d'une accélération négative du véhicule automobile supplémentaire, **caractérisé en ce que** le véhicule automobile est entraîné de manière hybride et présente un premier agrégat d'entraînement conçu comme un moteur à combustion interne et un second agrégat d'entraînement conçu comme un moteur électrique, dans lequel un démarrage du moteur à combustion interne est empêché lors d'une accélération positive du véhicule automobile et le couple d'entraînement est sélectionné de sorte qu'il peut être fourni uniquement au moyen du moteur électrique, et lors d'une accélération négative du véhicule automobile, une décélération du véhicule automobile se produit à l'aide du moteur électrique avec récupération d'énergie électrique, dans lequel une vitesse finale du véhicule automobile supplémentaire est prédite à une fin d'accélération à l'aide d'au moins une condition environnementale, dans lequel la distance de consigne est définie à la distance prédéfinie lorsque la vitesse du véhicule automobile supplémentaire reste constante à partir de la fin de l'accélération et la distance du véhicule automobile par rapport au véhicule automobile supplémentaire est ensuite définie à cette distance.

2. Procédé selon la revendication 1, **caractérisé en ce que** la distance de consigne est limitée vers le bas par une distance minimale et vers le haut par une distance maximale, qui entourent ensemble une plage de distance prédéfinie.

3. Procédé selon l'une quelconque des revendications précédentes, **caractérisé en ce qu'**une accélération prédéfinie est déterminée en fonction de l'accélération du véhicule automobile supplémentaire et est définie au niveau de l'appareil d'entraînement, dans lequel l'accélération prédéfinie est dirigée vers une variation de vitesse du véhicule automobile et présente le même signe que l'accélération du véhicule automobile supplémentaire.

4. Procédé selon l'une quelconque des revendications précédentes, **caractérisé en ce que** la distance prévisible du véhicule automobile est déterminée par rapport au véhicule automobile supplémentaire à la fin de l'accélération à l'aide d'au moins l'accélération du véhicule automobile et de l'accélération du véhicule automobile supplémentaire.

5. Procédé selon les revendications 2 et 4, **caractérisé en ce que** le couple de consigne défini au niveau de l'appareil d'entraînement est sélectionné de sorte que la distance prévisible se situe dans la plage de distance prédéfinie.

6. Procédé selon la revendication 5, **caractérisé en ce que** le couple de consigne est sélectionné de sorte que la distance prévisible à la fin de l'accélération correspond, lors d'une accélération négative, à la distance minimale ou, lors d'une accélération positive, à la distance maximale.

7. Procédé selon la revendication 5, **caractérisé en ce que** la vitesse du véhicule automobile est définie à partir de la fin de l'accélération en maintenant le couple de consigne de sorte que la distance entre le véhicule automobile et le véhicule automobile supplémentaire varie en direction de la distance prédéfinie.

8. Véhicule automobile, en particulier pour la mise en œuvre du procédé selon une ou plusieurs des revendications précédentes, qui présente un appareil d'entraînement pour fournir un couple d'entraînement ainsi qu'un appareil de détection pour détecter au moins un véhicule automobile supplémentaire qui le précède, et dans lequel un appareil pour le guidage longitudinal automatique du véhicule automobile existe, appareil qui est conçu pour aligner, dans le cadre du guidage longitudinal, une vitesse du véhicule automobile à une vitesse du véhicule automobile supplémentaire qui le précède, de sorte qu'une distance existant entre le véhicule automobile et le véhicule automobile supplémentaire reste constante au moins temporairement, dans lequel la distance du véhicule automobile par rapport au véhicule automobile supplémentaire est définie sur une distance de consigne, dans lequel la distance de consigne correspond, pour une distance constante, à une distance prédéfinie et est augmentée, à partir de la distance prédéfinie, lors d'une variation de distance résultant d'une accélération positive du véhicule automobile supplémentaire et est diminuée lors d'une variation de distance résultant d'une accélération négative du véhicule automobile supplémentaire, **caractérisé en ce que** le véhicule automobile est entraîné de manière hybride et présente un premier agrégat d'entraînement conçu comme un moteur à combustion interne et un second agrégat d'entraînement conçu comme un moteur électrique, dans lequel le véhicule automobile est en outre conçu pour empêcher un démarrage du moteur à combustion interne lors d'une accélération positive du véhicule automobile et sélectionner le couple d'entraînement de sorte qu'il peut être fourni uniquement au moyen du moteur électrique, et lors d'une accélération négative du véhicule automobile, une décélération du véhicule automobile se produit à l'aide du moteur électrique avec récupération d'énergie électrique, dans lequel une vitesse finale du véhicule automobile supplémentaire est prédite à une fin d'accélération à l'aide d'au moins une condition environnementale, dans lequel la distance de consigne est définie à la distance prédéfinie lorsque la vitesse du véhicule automobile supplémentaire reste constante à partir de la fin de l'accélération et la distance du véhicule automobile par rapport au véhicule automobile supplémentaire est ensuite définie à cette distance.
